# EUROPÄISCHE PATENTANMELDUNG

(11) **EP 1 189 091 A2**
(43) Veröffentlichungstag der Anmeldung: **20.03.2002**
(21) Anmeldenummer: 01114436.7
(22) Anmeldetag: 15.06.2001
(51) Int. Cl.: G02B 21/24, G02B 7/20

(54) **Okularrohr-Manschette**

(30) Priorität: 13.09.2000 DE 10045228
(71) Anmelder: Leica Microsystems AG, 9435 Heerbrugg (CH)
(72) Erfinder: Gräfenhain, Paul, 9435 Heerbrugg (CH)
(74) Vertreter: Reichert, Werner F., Dr.

(57) **Zusammenfassung**

Es wird eine Manschette (1) für beweglich gehalterte Okularrohre (2) für optische Geräte beschrieben, die in ihrem okularseitigen Teil (5) an der Außenwand des Okularrohres (2) anliegt und mit ihrem gehäuseseitigen Teil (6) die Innenwandung einer für das Okularrohr (2) vorgesehenen Öffnung (7) des Tubusgehäuses (3) umgreift. Die Manschette (1) zeichnet sich durch einen festen Sitz an beiden Gerätebaugruppen (2 bzw. 3) aus und ist gegen ein - auch unbeabsichtigtes - Entfernen sicher geschützt. Hierdurch wird eine luft- und feuchtigkeitsundurchlässige, hermetische Abdichtung der relevanten Teile des optischen Gerätes erzielt.

## Beschreibung

Die Anmeldung betrifft eine Manschette für bewegliche Okularrohre, die in einem optischen Gerät - insbesondere in einem mit einem Binokulartubus ausgestatteten Mikroskop - vorgesehen sind. Eine Verstellung eines einzelnen Okularrohres, das in einem Monokulartubus beweglich gehaltert ist, kann beispielsweise dann von ergonomischen Vorteil sein, wenn dadurch eine optimale Einblickhöhe für den jeweiligen Mikroskop-Benutzer eingestellt werden soll. Andererseits ist es bei mit Binokulartuben ausgestatteten Mikroskopen erforderlich, mindestens ein Okularrohr zur Anpassung an den optimalen Augenabstand des jeweiligen Benutzers entsprechend seitlich zu verschieben. Die Verschiebung eines Okulars bzw. beider Okulare kann dabei längs einer linearen Strecke erfolgen; es ist auch möglich, dass die Verschiebung auf einer Kreisbahn bzw. entlang einer anderweitig gekrümmten Strecke erfolgt. In jedem Falle muss bauseitig in dem das Okular tragenden Gehäuseteil eine Durchführungsöffnung vorhanden sein, die derart dimensioniert ist, dass eine Verschiebung des Okulars in mindestens einer Richtung möglich ist. Hierbei ergeben sich konstruktive Probleme dergestalt, dass die Innenteile der Mikroskop-Module (Okular-Bauteil, Mikroskoptubus, etc.) nicht ohne weiteres hermetisch abgedichtet werden können, so dass es bei längerer Benutzung zu unkontrollierten Verunreinigungen im Innenbereich des optischen Gerätes kommen kann.

Aus dem Mikroskopbau sind ein- bzw. mehrteilige lineare Schieberanordnungen für bewegliche Okulare bekannt geworden, die jedoch keine exakte Abdichtung des Okulargehäuses bzw. des Tubus bewirken können, da aufliegende Verunreinigungen bei vielfacher Verstellung der Okular-Positionen mehr und mehr in das Gehäuse "eingeschoben" werden können. Eine luft- und feuchtigkeitsundurchlässige, hermetische Abdichtung gelingt mit diesen bekannten Maßnahmen nicht. Auch ist eine komplette Reinigung dieser Teile des Mikroskop-Gehäuses nicht möglich, da die einzelnen Schieber-Bereiche nicht durchgängig für den Mikroskop-Benutzer zugänglich sind.

Weitere Versuche, einen hermetischen Schutz für optische Geräte zu realisieren, bestehen beispielsweise darin, ein sogenanntes "Drape" über das gesamte Gerät - beispielsweise ein Operationsmikroskop - zu ziehen bzw. zu stülpen. Dieser Vorschlag ist jedoch im Detail-Bereich zwischen Okularrohr und Tubusgehäuse nicht anwendbar.

Es ist daher die Aufgabe der vorliegenden Erfindung, die Nachteile der bekannten Lösungen zu vermeiden und einen hermetischen Schutz für den Geräte-Innenbereich zwischen einem beweglich gehalterten Optik-Bauteil (Okular bzw. Okular-Aufnahmerohr) und einem dazugehörigen, in Wirkstellung ortsfesten Gehäuse-Bauteil (Okular-Tubus bzw. Binokular-Tubus) zu realisieren. Es ist weiterhin Aufgabe der vorliegenden Erfindung, die hermetische Abdichtung derart zu verkörpern, dass eine leichte Außen-Reinigung des optischen Geräts erfolgen und dabei die Gefahr einer unbeabsichtigten Entfernung oder Verschiebung der Manschette mit Sicherheit ausgeschlossen werden kann.

Diese Aufgabe wird erfindungsgemäß durch eine Manschette nach dem Oberbegriff des Anspruchs 1 in der Weise gelöst, dass sie mit ihrem okularseitigen Teil die Außenwand des Okularrohres und mit ihrem gehäuseseitigen Teil die Innenwandung der für das Okularrohr vorgesehenen Öffnung des Tubusgehäuses eng anliegend umgreift. Dabei ist es vorteilhaft, dass jeder der beiden Endbereiche mindestens zwei Kontaktflächen aufweist, die nicht in einer einzigen, senkrecht zur Achse des Okularrohrs aufgespannten Ebene liegen. Mit Vorteil ist der okularseitige Teil der Manschette im Querschnitt in Form eines großen "L" ausgebildet, welcher in eine in der Außenwand des Okularrohres vorgesehenen umlaufenden Nut eingreift. Dabei kann der Winkel des im Querschnitt "L"-förmigen Teils kleiner als 90° sein, so dass eine zwischenraum-freie und exakt abdichtende Ringlippe an der Okularrohr-Außenwand anliegt. Nach einer weiteren Ausgestaltung der vorliegenden Erfindung kann der gehäuseseitige Teil im Querschnitt die Form eines abgewinkelten großen "C" aufweisen, welcher an der zugehörigen Öffnung im Tubusgehäuse anliegt. Dabei ist es von Vorteil, wenn das Tubusgehäuse im Kontaktbereich des gehäuseseitigen Teils der Manschette im Querschnitt stufenförmig ausgebildet ist. Die Manschette weist in ihrem Mitteilteil mindestens eine markante Ausbauchungs-Zone sowie mindestens eine engere Taillierungs-Zone auf.

Die erfindungsgemäße Manschette ist als einteiliger, flexibler Balg ausgeführt und besteht aus einem alterungsbeständigen Elastomer. Nach einer bevorzugten Ausführungsform können Teilbereiche der Manschette derart ausgestaltet sein, dass sie unterschiedliche Verformungseigenschaften aufweisen. So ist es beispielsweise möglich, dass sie in ihren jeweiligen Endbereichen aus einem Elastomer-Material größerer Härte besteht. Auch ist es möglich, dass die Manschette im Innenbereich ihrer Ausbauchungs-Zone eine umlaufende, wulstartige Verdickung aufweist. Diese Verdickung bildet mit der gesamten Manschette eine monolithische körperliche Einheit. Nach einer weiteren Ausgestaltungsform der vorliegenden Erfindung kann die Manschette im Außenbereich ihres okularseitigen Teils in Wirkstellung von einem Haltering umgriffen werden.

Auch ist es möglich, dass die Manschette im unteren Teil ihres zum Gehäuse weisenden Endbereichs mehrere lappenförmige Ausstülpungen zum besseren mechanischen Hintergreifen der Tubusgehäuse-Innenwandung aufweist. Es ist von Vorteil, wenn das Material der Manschette aus elektrisch leitendem Elastomer-Material besteht, um beispielsweise bei einem antistatischen Binokular-Mikroskop eingesetzt werden zu können. Schließlich ist es möglich, dass die erfindungsgemäße Manschette in Wirkstellung im Bereich ihrer Ausbauchungs-Zone einen einfügbaren federnden Spreizring aufweist, welcher von innen die Formstabilität der Ausbauchungs-Zone aufrecht erhält.

Die Erfindung wird nunmehr anhand der Figuren näher erläutert. Es zeigen in schematischer Darstellung:
- Figur 1:: eine Seitenansicht eines Monokular- bzw. Binokular-Mikroskopgehäuses;
- Figur 2:: einen Querschnitt eines mit einer erfindungsgemäßen Manschette ausgestatteten beweglichen Okulars in Wirkstellung mit angedeutetem Okulargehäuse;
- Figur 3:: einen Spreizring;
- Figur 4a:: eine perspektivische Darstellung einer Ausführungsform der erfindungsgemäßen Manschette;
- Figur 4b:: eine Seitenansicht des in Figur 4a Dargestellten;
- Figur 4c:: eine Draufsicht des in Figur 4a Dargestellten.
- Figur 5a:: eine Draufsicht auf den Klemmring;
- Figur 5b:: einen Schnitt längs der Linie A-A gemäß Fig. 5a.

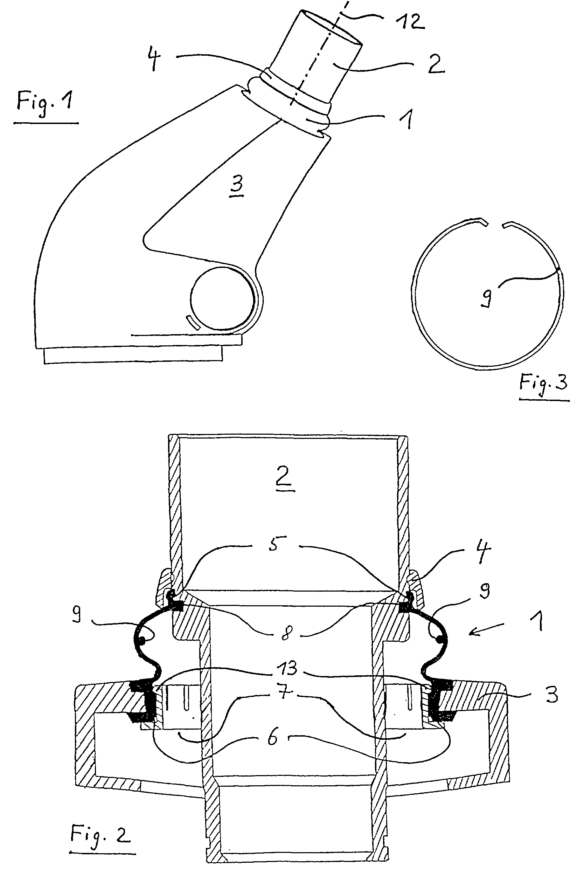

In Figur 1 ist die Seitenansicht eines Monokular- bzw. Binokular-Gehäuses 3 dargestellt. Man erkennt im Basis-Teil dieser Darstellung einen Flansch zum Adaptieren dieses Geräte-Moduls auf ein Gehäuse eines optischen Gerätes, beispielsweise eines Mikroskops. Mit 2 ist ein Okularrohr gekennzeichnet, dessen Achse 12 gleichzeitig die optische Achse des Okular-Bauteils darstellt. Dieses Okular ist beispielsweise zur Einstellung eines anderen Einblickwinkels innerhalb der Zeichenebene verschwenkbar. Da Figur 1 auch als Seitenansicht eines Binokular-Gehäuses 3 aufgefasst werden kann, wobei lediglich eines der beiden Okularrohre 2 zeichnerisch dargestellt ist, ergibt sich bei der Veränderung der Augenabstandsweite eine Translation eines oder beider Okulare 2 etwa senkrecht zur Zeichenebene.

Man erkennt weiterhin, dass die Manschette 1 den Zwischenbereich zwischen dem Okularrohr 2 und dem mit einer Öffnung 7 versehenen Tubusgehäuse 3 abdeckt. Dabei ist deutlich ein markanter Ausbauchungsbereich im okularseitigen Teil der Manschette 1 sowie ein schmaler Taillierungsbereich im gehäuseseitigen Teil der Manschette 1 erkennbar. Ein Haltering 4, der über das Okularrohr 2 gestülpt wird, sichert zusätzlich die Abdichtung der Manschette1 im okularseitigen Teil 5 ab.

Figur 2 zeigt einen Querschnitt eines beweglichen Okularrohrs 2 in einem Tubusgehäuse 3, das eine freie Öffnung 7 aufweist, die größer ist als der Außendurchmesser des Okularrohrs 2 in diesem Bereich. Die Manschette 1 zeigt in ihrem okularseitigen Teil 5 im Querschnitt ein Profil, das dem Großbuchstaben "L" ähnelt. Vorzugsweise ist der Winkel, der sich im Querschnitt dieses "L"-Profils ergibt, etwas kleiner als 90°; das bedeutet, dass der oberste Bereich des okularseitigen Teils 5 im festen Presssitz lippenartig an der Okular-Außenwand anliegt. Obwohl damit bereits eine exakte Abdichtung in diesem Teil des Moduls gewährleistet ist, kann dies noch zusätzlich durch einen Haltering 4 dauerhaft verbessert werden. Bei Einsatz dieses Halterings 4 ergibt sich zusätzlich ein Schutz vor mechanischer Beschädigung der oberen Lippendichtung.

Der gehäuseseitige Teil 6 der Manschette 1 weist im Querschnitt die Form eines abgewinkelten Großbuchstabens "C" auf. Man erkennt außerdem, dass die Wanddicke der Manschette 1 in beiden Endbereichen dicker ist als im Bereich der Ausbauchungs- bzw. Taillierungszone. Damit ist ein noch besseres Umgreifen, Umklammern bzw. Kontaktieren an den relevanten Gehäuseteilen gegeben. Es hat sich als besonders zweckmäßig herausgestellt, dass es für die Funktion einer derartigen erfindungsgemäßen Manschette vorteilhaft ist, wenn sie Bereiche unterschiedlicher Verformungseigenschaften aufweist. So könnte sie beispielsweise im Ausbauchungs- bzw. Taillierungsbereich eine höhere Elastizität aufweisen als in ihren Kontaktierungsbereichen an den jeweiligen Gehäuseteilen.

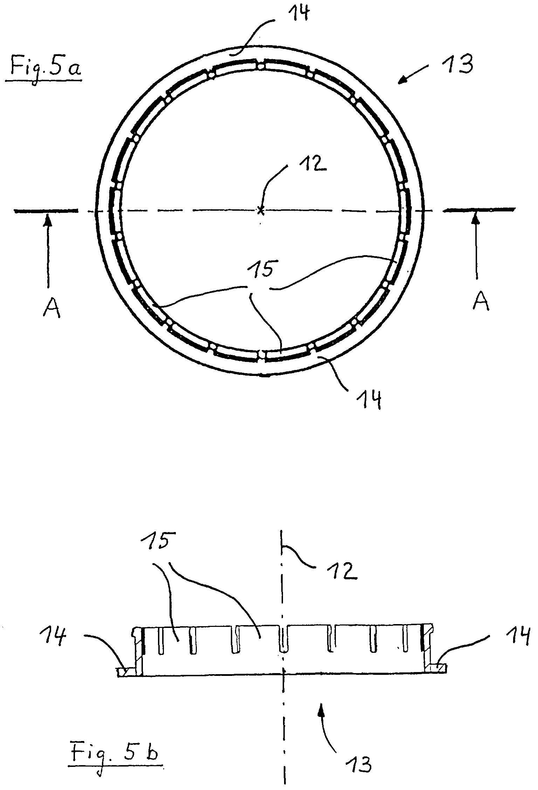

Ein in den Figuren 5a bzw. 5b isoliert dargestellter Klemmring 13 gewährleistet in Wirkstellung - vgl. Fig. 2 - einen festen und positionsgenauen Sitz des gehäuseseitigen Teils 6 der Manschette 1. Man erkennt in Fig. 5b, dass der Klemmring 13 einen ringförmigen Anlagebereich 14 sowie einen zylindrischen Wandbereich mit der Achse 12 als Rotationsachse aufweist. Dieser Wandbereich enthält eine Vielzahl von Spalten bzw. Einkerbungen, woraus ein Klemm- oder "Spreng"-Ring mit peripher angeordneten zinnenförmigen Lamellen 15 resultiert.

Um eine ästhetische und designerisch ansprechende Außenform der Manschette 1 bei jeder möglichen Einstellposition des Okularrohres 2 bzw. der Okularrohre 2 zu gewährleisten und außerdem sicherzustellen, dass bei einer Gehäuse-Außenreinigung keine konkaven Einstülpungen im Manschettenbereich vorkommen, die im übrigen von außen auch schwieriger zu reinigen wären, kann die Manschette 1 im Innenbereich ihres Ausbauchungsbereichs eine ringförmige, wulstartige Verstärkung aufweisen. Diese Verstärkung ist zusammen mit der Manschette 1 einstückig ausgebildet. Sie kann im Querschnitt kreisförmig sein; es sind jedoch auch andere Querschnittsformen in Abhängigkeit von der jeweiligen Dimensionierung jeder Manschette möglich. Alternativ könnte auch ein in Fig. 3 dargestellter federnder Spreizring 9, der gewissermaßen als Stütz-Korsett im Innenbereich der Ausbauchungs-Zone eingesetzt wird, verwendet werden. Damit wird ein ungewolltes "Einbeulen" von Manschetten-Teilbereichen wirkungsvoll vermieden.

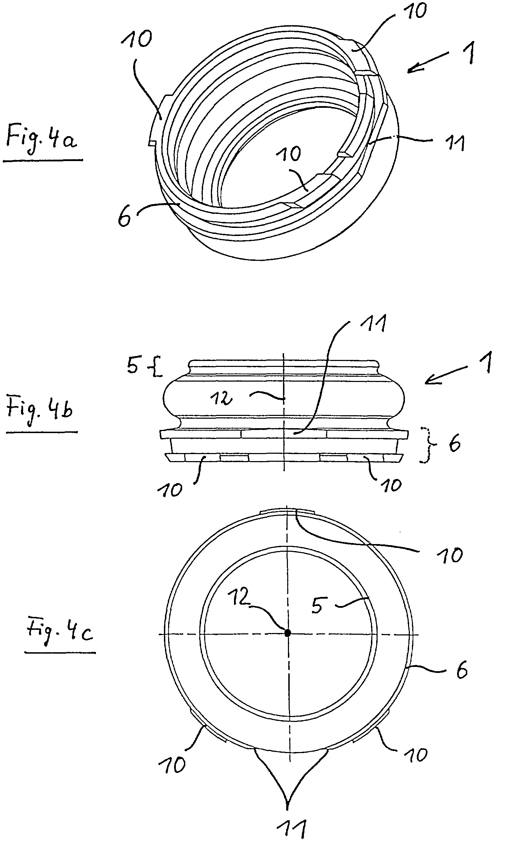

In den Figuren 4a bis 4c wird eine besondere Ausführungsform der erfindungsgemäßen Manschette 1 dargestellt. Man blickt in der Figur 4a auf den gehäuseseitigen Teil 6 der Manschette 1. Zu erkennen sind im peripheren Endbereich des Bereiches 6 drei lappenförmige Ausstülpungen 10. Sie hintergreifen in Wirkstellung den unteren Teil der Wandung des Tubusgehäuses 3. Aus den Figuren 4a bzw. 4b - und andeutungsweise auch aus Figur 4c - ist zusätzlich eine periphere Abflachung 11 im oberen Bereich von 6 zu erkennen. Diese Abflachung 11 ist in einer speziellen Ausführungsform - nämlich bei Verwendung dieser Manschetten für ein Binokulargehäuse - konstruktiv bedingt, und zwar durch den geringen Zwischenraum zwischen beiden Okularrohren 2 einer Binokular-Anordnung. Es liegt selbstverständlich im Rahmen der vorliegenden Erfindung, dass bei großzügigeren räumlichen Verhältnissen im binokularen Schwenkbereich die Manschette 1 auch komplett rotationssymmetrisch ausgeformt sein kann, wobei als "Rotationsachse" die Achse 12 der Manschette 1 dient.

Durch die besondere Materialauswahl, die Formgebung und die spezielle Art der Kontaktierung der beiden Endbereiche der Manschette mit den zugehörigen Optik-Gehäusen ergeben sich folgende Vorteile:
Der im Querschnitt "L"-förmige okularseitige Anflanschteil 5 sorgt für eine dauerhafte, unverrückbare, hermetisch abriegelnde Gehäuseverbindung am Okularrohr 2;
der im Querschnitt in Form eines abgewinkelten "C" ausgeführte gehäuseseitige Teil 6 der Manschette 1 sorgt für eine unverrückbare, fest ansitzende, hermetisch abgedichtete Kontaktierung mit dem Tubusgehäuse 3;
der im Querschnitt "S"-förmige Mitteilbereich der Manschette 1 "reguliert" gewissermaßen die Translations- bzw. Kippbewegung des Okularrohrs 2 relativ zum Tubusgehäuse 3 bei gleichzeitiger Aufrechterhaltung der Abdichtfunktion unter Beibehaltung eines ansprechenden designerischen Äußeren in diesem Gerätebereich sowie unter Beibehaltung der vorgegebenen Ausbauchungs- bzw. Taillierungs-Zonen ohne störende konkave Eindellungen.

### Bezugszeichenliste

- 1: Manschette
- 2: Okularrohr
- 3: Okular-/Binokular-Tubusgehäuse
- 4: (okularseitiger) Haltering
- 5: (oberer) okularseitiger Teil von (1)
- 6: (unterer) gehäuseseitiger Teil von (1)
- 7: Öffnung in (3)
- 8: umlaufende Nut an der Außenwandung von (2)
- 9: federnder Spreizring
- 10: lappenförmige Ausstülpungen im unteren Bereich von (6)
- 11: periphere Abflachung im oberen Bereich von (6)
- 12: Achse von (1) bzw. (2)
- 13: (gehäuseseitiger) Klemmring
- 14: (ringförmiger) Anlagebereich von (13)
- 15: (zinnenförmige) Lamellen

## Patentansprüche

1. Manschette für beweglich gehalterte Okularrohre für optische Geräte - insbesondere Binokular-Mikroskope, **dadurch gekennzeichnet, dass** die Manschette (1) mit ihrem okularseitigen Teil (5) die Außenwand des Okularrohres (2) und mit ihrem gehäuseseitigen Teil (6) die Innenwandung der für das Okularrohr (2) vorgesehenen Öffnung (7) des Tubusgehäuses (3) umgreift.

2. Manschette nach Anspruch 1, **dadurch gekennzeichnet, dass** jeder der beiden Endbereiche (5 bzw. 6) mindestens zwei Kontaktflächen aufweist, die nicht in einer einzigen, senkrecht zur Achse (12) des Okularrohres (2) aufgespannten Ebene liegen.

3. Manschette nach Anspruch 1 oder 2, **dadurch gekennzeichnet, dass** ihr okularseitiger Teil (5) im Querschnitt "L"-förmig ausgebildet ist und in eine in der Außenwand des Okularrohres (2) vorgesehenen Nut (8) eingreift.

4. Manschette nach Anspruch 3, **dadurch gekennzeichnet, dass** der Winkel des im Querschnitt "L"-förmigen Teils (5) kleiner als 90 Grad ist.

5. Manschette nach Anspruch 1 oder 2, **dadurch gekennzeichnet, dass** ihr gehäuseseitiger Teil (6) im Querschnitt die Form eines abgewinkelten "C" aufweist und an der Öffnung (7) im Tubusgehäuse (3) anliegt.

6. Manschette nach Anspruch 5, **dadurch gekennzeichnet, dass** das Tubusgehäuse (3) im Kontaktbereich des Teiles (6) der Manschette (1) im Querschnitt stufenförmig ausgebildet ist.

7. Manschette nach mindestens einem der vorhergehenden Ansprüche, **dadurch gekennzeichnet, dass** sie in ihrem Mittelteil mindestens eine Ausbauchungs-Zone und mindestens eine Taillierungs-Zone aufweist.

8. Manschette nach Anspruch 7, **dadurch gekennzeichnet, dass** die Taillierungs-Zone gehäuseseitig angeordnet ist.

9. Manschette nach mindestens einem der vorhergehenden Ansprüche, **dadurch gekennzeichnet, dass** sie als einteiliger, flexibler Balg ausgeführt ist und aus einem Elastomer besteht.

10. Manschette nach Anspruch 9, **dadurch gekennzeichnet, dass** das Material der Manschette (1) in unterschiedlichen Teilbereichen unterschiedliche Verformungseigenschaften aufweist.

11. Manschette nach Anspruch 10, **dadurch gekennzeichnet, dass** sie in ihren jeweiligen Endbereichen (5 bzw. 6) aus einem Elastomer-Material größerer Härte besteht.

12. Manschette nach mindestens einem der vorhergehenden Ansprüche, **dadurch gekennzeichnet, dass** sie im Innenbereich ihrer Ausbauchungs-Zone eine umlaufende wulstartige Verdickung aufweist.

13. Manschette noch mindestens einem der vorhergehenden Ansprüche, **dadurch gekennzeichnet, dass** ihr gehäuseseitiger Teil (5) in Wirkstellung von einem Haltering (4) umgriffen wird.

14. Manschette nach mindestens einem der vorhergehenden Ansprüche, **dadurch gekennzeichnet, dass** ihr gehäuseseitiger Teil (6) in Wirkstellung durch einen Klemmring (13) ortsfest gehaltert wird.

15. Manschette nach mindestens einem der vorhergehenden Ansprüche, **dadurch gekennzeichnet, dass** sie im unteren Teil ihres zum Gehäuse (3) weisenden Endbereichs (6) mehrere lappenförmige Ausstülpungen (10) aufweist.

16. Manschette nach mindestens einem der vorhergehenden Ansprüche, **dadurch gekennzeichnet, dass** sie aus einem elektrisch leitenden Kunststoff-Material besteht.

17. Manschette nach mindestens einem der vorhergehenden Ansprüche, **dadurch gekennzeichnet, dass** sie in Wirkstellung im Innenbereich ihrer Ausbauchungs-Zone einen einfügbaren, federnden Spreizring (9) aufweist.

18. Verwendung von Manschetten nach mindestens einem der vorhergehenden Ansprüche für Okular-Abdichtungen bei antistatischen optischen Geräten, insbesondere Binokular-Mikroskopen.
